# EUROPÄISCHE PATENTSCHRIFT

(11) **EP 2 828 541 B1**
(45) Veröffentlichungstag und Bekanntmachung des Hinweises auf die Patenterteilung: **23.08.2017**
(21) Anmeldenummer: 13708742.5
(22) Anmeldetag: 28.02.2013
(51) Int. Cl.: F16D 13/70

(54) **HEBELELEMENT FÜR EINE FEDEREINRICHTUNG EINER REIBKUPPLUNG SOWIE ENTSPRECHENDE REIBKUPPLUNG**
LEVER ELEMENT FOR A SPRING DEVICE OF A FRICTION CLUTCH AND CORRESPONDING FRICTION CLUTCH
ÉLÉMENT DE LEVIER POUR UN DISPOSITIF ÉLASTIQUE D'UN EMBRAYAGE À FRICTION ET EMBRAYAGE À FRICTION CORRESPONDANT

(30) Priorität: 22.03.2012 DE 102012204629
(43) Veröffentlichungstag der Anmeldung: 28.01.2015
(73) Patentinhaber: Schaeffler Technologies AG & Co. KG, 91074 Herzogenaurach (DE)
(72) Erfinder: LORAN, Igor, 77839 Lichtenau (DE)
(86) Internationale Anmeldenummer: PCT/EP2013/054023
(87) Internationale Veröffentlichungsnummer: WO 2013/139571

(56) Entgegenhaltungen:
- EP-A1- 1 512 881
- DE-A1-102009 034 810

## Beschreibung

Gegenstand der vorliegenden Erfindung ist eine Reibkupplung für einen Antriebsstrang eines brennkraftmaschinengetriebenen Kraftfahrzeugs.

Reibkupplungen dienen zum Übertragen von Drehmoment von einer Eingangsseite der Reibkupplung zu einer Ausgangsseite, bevorzugt ist eine Ausbildung, bei der die Eingangsseite mit einer Antriebseinheit und die Ausgangsseite mit einem Antriebsstrang verbunden ist. Die lösbare Übertragung des Drehmoments erfolgt dabei reibschlüssig von der Eingangsseite zur Ausgangsseite, indem eine begrenzt verrückbare Anpressplatte mit entsprechenden Reibbelägen zur Übertragung des Drehmoments eingesetzt wird.

Stand der Technik sind sogenannte Einscheiben-Tellerfederkupplungen, bei denen eine Anpressplatte im eingerückten Zustand an die Kupplungsscheibe gepresst wird. Hierbei wird das Ein- und Ausrücken der Anpressplatte über eine Tellerfeder vermittelt. Diese weist Zungen auf, die von einem ringförmigen äußeren Bereich radial nach innen weisen. Bei einer Betätigung dieser Zungen, beispielsweise über ein Ausrücklager, erfolgt eine Abhubbewegung auf die Anpressplatte, die die Anpressplatte und die zwischen Anpressplatte und Kupplungsscheibe ausgebildeten Kupplungsbeläge von der Kupplungsscheibe trennt.

Aus der nicht vorveröffentlichten deutschen Patentanmeldung mit Aktenzeichen DE 10 2011 080 361.0 ist es bekannt, eine solche Tellerfeder in zwei Funktionsbereiche zu trennen. Hierbei wird eine kreisringförmige Tellerfeder ausgebildet, die von einem oder mehreren Hebelelementen bewegt wird. Die Hebelelemente übernehmen dabei die Funktion der eben beschriebenen Zungen.

Aus der nicht vorveröffentlichten deutschen Patentanmeldung mit Aktenzeichen DE 10 2011 088 585.4 sind Hebelelemente bekannt, die durch radial außen liegende doppelte Federelemente, zwischen denen ein Abstützabschnitt ausgebildet ist, im Vergleich zu anderen Lösungen aus dem Stand der Technik vergrößerte Hebelsteifigkeit und Stützfederkraft aufweisen.

Aus der EP 1 512 881 A1 ist eine Reibkupplung mit für einen Antriebsstrang eines brennkraftmaschinengetriebenen Kraftfahrzeugs bekannt, umfassend eine Anpressplatte und eine Federeinrichtung zur Beaufschlagung der Anpressplatte mit wenigstens einem Hebelelement, wobei das Hebelelement an einem ersten Ende einen Betätigungsabschnitt und an einem dem ersten Ende gegenüberliegenden zweiten Ende zwei Federabschnitte und einen zwischen den Federabschnitten ausgebildeten weiteren Abschnitt aufweist, wobei die Federabschnitte jeweils über ein Stegelement mit dem weiteren Abschnitt verbunden sind und die Stegelemente gegenüber dem weiteren Abschnitt so in eine Richtung gebogen sind, dass die Federabschnitte einen Winkel von mindestens 60° mit einer Tangente an den weiteren Abschnitt im Bereich des Stegelements einschließen.

Es ist Aufgabe der vorliegenden Erfindung, eine Reibkupplung mit einem Hebelelement vorzuschlagen, bei der im Vergleich zu aus dem Stand der Technik bekannten Lösungen ein reduzierter Materialeinsatz bei ähnlich großer Hebelsteifigkeit und Stützfederkraft möglich ist.

Erfindungsgemäß gelöst wird diese Aufgabe durch eine Reibkupplung gemäß Patentanspruch 1. Bevorzugte Weiterbildungen sind in den abhängigen Ansprüchen dargelegt.

Bevorzugt ist eine Ausgestaltung, bei der die Federabschnitte einen Winkel von mehr als 80°, besonders bevorzugt sogar einen in etwa rechten Winkel mit dem Abhubabschnitt bilden. Durch das Aufbiegen der Federelemente kommt es zu einer signifikanten Erhöhung der Steifigkeit der Federelemente, so dass die Abstützkraft des Hebelelements beim Einsatz in der Reibkupplung vergrößert werden kann. Dies führt dazu, dass gleichzeitig die Materialstärke der Federelemente und gegebenenfalls des gesamten Hebelelements signifikant verringert werden kann. So ist das Hebelelement im Vergleich zu aus dem Stand der Technik bekannten Lösungen bei gleicher Steifigkeit und Abstützkraft deutlich leichter. Dies führt zu einer leichteren Ausbildung der entsprechenden Reibkupplung und damit zu einer signifikanten Gewichts- und folglich Kraftstoffverbrauchsreduktion in einem Automobil. Die erhöhte Steifigkeit des Hebelelements ermöglicht gleichzeitig gegebenenfalls die Auswahl anderer Materialien als bei aus dem Stand der Technik bekannten Lösungen. So ist es beispielsweise möglich, statt relativ teurem Federstahl einfacheren Stahl einzusetzen.

Gleichzeitig können die Kosten zur Herstellung eines solchen Hebelelements deutlich reduziert werden. So ist es beispielsweise möglich, bei Reduktion der Materialstärke von beispielsweise 3 mm bei aus dem Stand der Technik bekannten Hebelelementen zu 2 mm bei der vorgeschlagenen Lösung eine Gewichtsersparnis von etwa einem Drittel zu realisieren und die Kosten - trotz eines weiteren Schritts im Rahmen der Herstellung - um etwa 30 % zu senken.

Bevorzugt ist eine Ausgestaltung des Hebelelements, bei dem Betätigungsabschnitt und Abhubabschnitt einen Winkel miteinander einschließen, wobei es weiterhin bevorzugt ist, wenn die Stegelemente in entgegengesetzter Richtung gebogen sind als die Richtung, in die der Betätigungsabschnitt vom Abhubabschnitt absteht. Die Federabschnitte sind also in eine entgegengesetzte Richtung gekrümmt wie der Betätigungsabschnitt des Hebelelements.

Gemäß einer vorteilhaften Ausgestaltung des Hebelelements überragt der Abhubabschnitt die Federabschnitte in Richtung des zweiten Endes.

So ist es möglich, die Federabschnitte zum Aufbau beziehungsweise zur Vergrößerung einer Abstützkraft beispielsweise an einem Kupplungsdeckel oder an einem anderen Elemente der Reibkupplung festzulegen, während die Abhubabschnitte sich weitest möglich nach draußen erstrecken, um eine möglichst effiziente Abhubbewegung der Anpressplatte durch einen längeren Hebelarm bei Verbindung derselben beispielsweise über Abhubanker zu ermöglichen.

Gemäß einer weiteren vorteilhaften Ausgestaltung weist das Hebelelement mindestens eine Sicke auf.

Durch Ausbildung einer Sicke kann eine weitere Versteifung des Hebelelements erreicht werden. Bevorzugt ist dabei eine Ausgestaltung, bei der eine Sicke im Bereich des Abhubabschnitts und/oder im Bereich des Betätigungsabschnitts ausgebildet ist. Besonders bevorzugt ist eine Ausgestaltung, bei der eine Sicke im Abhubabschnitt und zumindest in Teilbereichen des Betätigungsabschnitts ausgebildet ist.

Durch den Einsatz des Hebelelements ist bei Ausbildung der Reibkupplung der Abhubabschnitt jedes Hebelelements in Umfangsrichtung der Reibkupplung jeweils zwischen den entsprechenden Federabschnitten des Hebelelements ausgebildet. Der Abhubabschnitt wird mit dem Abhubanker verbunden, beispielsweise indem der Abhub-abschnitt mindestens teilweise in eine entsprechende Ausnehmung wie eine Nut oder eine Öffnung des Abhubankers eingreift. Der Abhubanker selbst ist mit der Anpressplatte verbunden. Bevorzugt weist die Anpressplatte eine gleiche Anzahl von Abhubankern wie Hebelelementen auf. Jedes Hebelelement ist also bevorzugt über einen Abhubabschnitt mit einem entsprechenden Abhubanker verbunden. Das erste Ende des mindestens einen Hebelelements ist jeweils bevorzugt radial innenliegend ausgeführt, während das zweite Ende radial außenliegend ausgebildet ist. Im montierten Zustand sind die Federabschnitte der Hebelelemente vorgespannt, um den Kontakt zwischen dem Hebelelement und dem entsprechenden Fixierpunkt wie beispielsweise einem Kupplungsdeckel oder einem Segment eines Kupplungsdeckels über die ganze Lebensdauer der Reibkupplung auch in der Verschleißsituation zu gewährleisten. Die Abstützkraft, erzeugt durch die Vorspannung der Federabschnitte, ist dabei bevorzugt so hoch ausgelegt, dass die höheren Ausrückkräfte der Reibkupplung im Verschleiß abgestützt werden und die Kupplungsfunktion sichergestellt bleibt.

Im Betrieb der Reibkupplung wird beim Betätigen, also beispielsweise beim Ein- oder Auskuppeln der mindestens eine Betätigungsabschnitt des mindestens einen Hebelelements durch ein Betätigungselement wie beispielsweise ein Ausrücklager in eine Betätigungsrichtung bewegt, die bevorzugt hin zur Anpressplatte gerichtet und beispielsweise der Einrückrichtung der Reibkupplung entspricht. Entsprechend ist in diesem Beispiel die Ausrückrichtung der Reibkupplung entgegengesetzt zur Betätigungsrichtung ausgerichtet. Durch die Fixierung der Hebelelemente an einem Kupplungsdeckel oder einem Kupplungsgehäuse wird erreicht, dass sich durch die Einwirkung des Betätigungselements auf den Betätigungsabschnitt des mindestens einen Hebelelements die Abhubabschnitte des mindestens einen Hebelelements in eine Richtung bewegt, die entgegengesetzt zur Betätigungsrichtung ist. Dadurch wird entsprechend eine Kraft auf die Abhubanker und damit auf die Anpressplatte ausgeübt, die zum Abheben der Anpressplatte von der Kupplungsscheibe beziehungsweise allgemein dem Reibpartner der Anpressplatte führt. Durch die Ausbildung der Hebelelemente mit den aufgebogenen Federabschnitten kommt es vorteilhaft zu einer Versteifung der jeweiligen Federabschnitte, die eine Ausbildung des Hebelelements aus einem Material mit einer geringeren Materialstärke im Vergleich zu aus dem Stand der Technik bekannten Lösungen erlauben. Dies ermöglicht die Ausbildung einer leichteren Reibkupplung im Vergleich zu aus dem Stand der Technik bekannten Lösungen.

Gemäß einer vorteilhaften Ausgestaltung der Reibkupplung weist der Abhubanker eine Nut zur Aufnahme wenigstens eines Teils des Abhubabschnitts des Hebelelements auf.

Durch die Ausbildung einer Nut in dem mindestens einen Abhubanker, welcher bevorzugt einteilig mit der Anpressplatte ausgebildet ist oder mit dieser form- und/oder kraftschlüssig verbunden ist, kann es durch das Eingreifen eines Teils des Abhubabschnitts, bevorzugt eines entsprechenden Eingreifelements, welches beispielsweise eine entsprechende Zunge umfassen kann, zu einer einfachen Ausbildung einer Verbindung zwischen Abhubabschnitt und Abhubanker. Dies ermöglicht eine einfache Montage der Reibkupplung und erlaubt im Falle einer notwendigen Wartung oder Reparatur der Reibkupplung einen einfachen Austausch des entsprechenden Hebelelements.

Gemäß einer weiteren Ausgestaltung der Reibkupplung ist der Abhubanker einteilig mit der Anpressplatte ausgebildet.

Eine einteilige Ausbildung von Anpressplatte und Abhubanker ermöglicht eine einfache Montage der entsprechenden Reibkupplung, weil es nicht notwendig ist, den beziehungsweise die Abhubanker relativ zur Anpressplatte zu positionieren und zu fixieren.

Gemäß einer alternativen Weiterbildung ist der Abhubanker kraft- und/oder formschlüssig mit der Anpressplatte verbunden.

Die Ausbildung einer kraft- und/oder formschlüssigen Verbindung ermöglicht auf einfache Art und Weise einen Austausch eines eventuellen beschädigten Abhubankers bei Reparatur der entsprechenden Reibkupplung.

Gemäß einem weiteren Aspekt wird ein Kraftfahrzeug aufweisend eine Antriebseinheit mit einer Abtriebswelle, einem Antriebsstrang und einer Reibkupplung zum lösbaren Verbinden der Abtriebswelle mit dem Antriebsstrang vorgeschlagen. Bevorzugt ist die Antriebseinheit im Kraftfahrzeug vor einer Fahrerkabine und quer zu einer Längsachse des Kraftfahrzeugs angeordnet.

Die meisten Kraftfahrzeuge weisen heutzutage einen Frontantrieb auf und ordnen daher bevorzugt die Antriebseinheit, beispielsweise eine Verbrennungskraftmaschine oder ein Elektromotor, vor der Fahrerkabine und quer zur Hauptfahrrichtung an. Der Bauraum ist gerade bei einer solchen Anordnung besonders gering und es ist daher besonders vorteilhaft, eine Kupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die oben beschriebene Reibkupplung ist für Kleinwagen besonders vorteilhaft, weil die Gesamtbaugröße klein ist. Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: eine als bekannt angenommene Reibkupplung;
- Fig. 2:: ein als bekannt angenommenes Hebelelement;
- Fig. 3:: ein Hebelelement;
- Fig. 4:: einen Schnitt durch einen Teil des Hebelelements;
- Fig. 5: eine Reibkupplung mit mehreren Hebelelementen;
- Fig. 6: eine Ausgestaltung eines Abhubankers; und
- Fig. 7: ein Kraftfahrzeug.

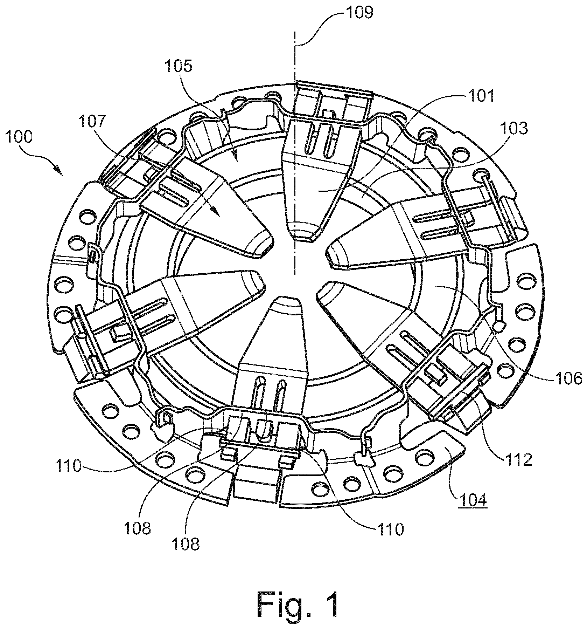

Fig. 1 zeigt schematisch eine als bekannt angenommene Reibkupplung 100. Eine Reibkupplung wie die Reibkupplung 100 dient bevorzugt der Kraftübertragung von einer Antriebseinheit zu einem Antriebsstrang, insbesondere in einem Kraftfahrzeug. Regelmäßig wird hier als Antriebseinheit eine Brennkraftmaschine ausgebildet, als Antriebsstrang oftmals ein Antriebsstrang enthaltend ein schaltbares Getriebe. Eine Reibkupplung wie die Reibkupplung 100 dient zur reibschlüssigen Übertragung von Drehmoment von einer Eingangsseite zu einer Ausgangsseite. Die reibschlüssige Übertragung erfolgt dabei über eine Anpressplatte 103 auf einen entsprechenden Reibpartner wie eine Kupplungsscheibe, die in dieser Ansicht nicht erkennbar ist. Über den Reibpartner wie beispielsweise die Kupplungsscheibe erfolgt die Übertragung des Drehmoments auf eine hier nicht gezeigte Gegendruckplatte, die üblicherweise mit einem oder mehreren Kupplungsgehäuseteilen, insbesondere mit einem Kupplungsdeckel 104 drehfest verbunden ist. Weiterhin ist eine Federeinrichtung 105 ausgebildet. Diese umfasst eine Tellerfeder 106, die ringförmig ausgebildet ist, sowie mehrere Hebelelemente 107. Gemäß dem vorliegenden Beispiel sind sechs Hebelelemente 107, jedoch sind auch andere Anzahlen von Hebelelementen 107 wie beispielsweise acht pro Federeinrichtung 105 möglich.

Die Tellerfeder 106 ist ohne Zungen ausgeführt. Die Funktion einer üblichen Tellerfeder mit Zungen ist somit auf die Tellerfeder 106 und die Hebelelemente 107 aufgeteilt. Die Hebelelemente 107 dienen als Betätigungshebel und ersetzen die üblichen Zungen der Tellerfeder. Mit den Hebelelementen 107 kann ein Abhub der Anpressplatte 103 erreicht werden. Hierzu sind die Hebelelemente 107 gehäuseseitig am Kupplungsdeckel 104 verkippbar abgestützt und gelagert.

Die Hebelelemente 107 sind durch eine hier nicht dargestellte Betätigungseinrichtung wie beispielsweise ein Ausrücklager im Bereich eines Betätigungsabschnitts 101 betätigbar. Bevorzugt erstrecken sich die Hebelelemente 107 durch den Kupplungsdeckel 104 hindurch, insbesondere durch entsprechende Durchbrechungen 108 im Kupplungsdeckel 104. Die Hebelelemente 107 erstrecken sich im Wesentlichen in radialer Richtung vom Außenrand der Reibkupplung 100 betrachtet nach innen und damit orthogonal zu einer Drehachse 109 der Reibkupplung 100. Die Hebelelemente 107 weisen zwei Abhubabschnitte 110 und einen in Umfangsrichtung dazwischen liegenden Federabschnitt 111 auf, wobei die Abhubabschnitte 106 mit einem Abhubanker 112 der Anpressplatte 103 eingreifend verbunden sind. Über den Federabschnitt 111 wird dabei erreicht, dass der Kontakt zwischen dem Hebelelement 107 und dem Kupplungsgehäuse über die gesamte Lebensdauer der Reibkupplung gewährleistet ist, in dem die Abstützkraft, durch die die Vorspannung im eingebauten Zustand des Federabschnitts erzeugt wird, so hoch ausgelegt wird, dass die höheren Ausrückkräfte beim Ausrücken der Reibkupplung im zumindest teilweise verschlissenen Zustand aufgegangen werden und die Kupplungsfunktion trotz Verschleiß sichergestellt ist. Aufgrund der geringen Steifigkeit des Hebelelements 107 und insbesondere des Federabschnitts 111 ist nur eine relativ eingeschränkte Abstützkraft erreichbar.

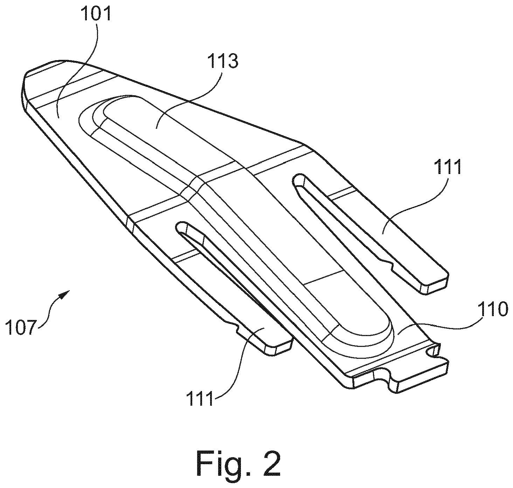

Fig. 2 zeigt eine andere ebenfalls als bekannt angenommene Gestaltung des Hebelelements 107 mit zwei Federabschnitten 111, zwischen denen ein Abhubabschnitt 110 ausgebildet ist. Eine entsprechende Ausgestaltung des Hebelelements 107, wie in Fig. 2 gezeigt, weist bereits eine höhere Steifigkeit als die Hebelelemente 107 nach Fig. 1 auf und kann ferner aufgrund der geometrischen Verhältnisse durch eine Sicke 113 weiter versteift werden. Gegenüberliegend zum Abhubabschnitt 110 ist ein Betätigungsabschnitt 101 ausgebildet.

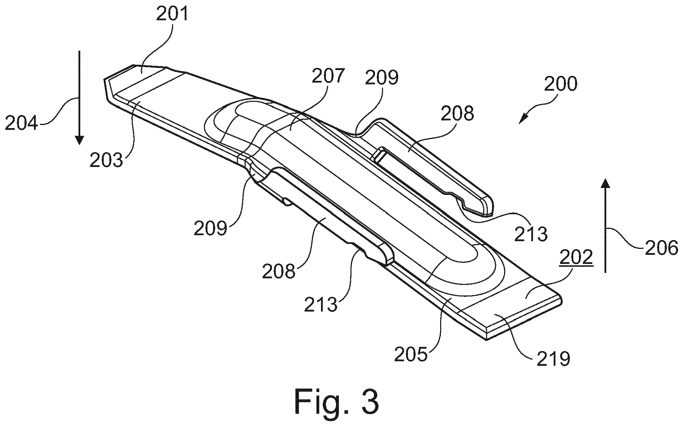

Fig. 3 zeigt eine weitere Ausgestaltungsmöglichkeit eines Hebelelements 200. Das Hebelelement 200 weist ein erstes Ende 201 und ein dem ersten Erste 201 gegenüberliegendes zweites Ende 202 auf. Am ersten Ende 201 weist das Hebelelement 200 einen Betätigungsabschnitt 203 auf. Dieser wird im Betrieb und im Einsatz einer entsprechenden Federeinrichtung einer Reibkupplung durch ein Betätigungselement betätigt, das heißt in einer Betätigungsrichtung 204 mit Kraft beaufschlagt. Durch eine entsprechende Festlegung des Hebelelements 200 zwischen dem ersten Ende 201 und dem zweiten Ende 202 kommt es deshalb zu einer Bewegung eines Abhubabschnitts 205 am zweiten Ende 202 in Abhubrichtung 206. Hierdurch kann eine entsprechende Abhubbewegung einer hier nicht gezeigten Anpressplatte einer Reibkupplung in Abhubrichtung 206 erfolgen. Betätigungsabschnitt 203 und Abhubabschnitt 205 sind zueinander geknickt ausgeführt. Zur Versteifung weist das Hebelelement 200 sowohl im Bereich des Betätigungsabschnitts 203 als auch im Bereich des Abhubabschnitt 205 eine Sicke 207 auf. Durch diese Sicke 207 kann bei gleicher Materialdicke des Hebelelements 200 eine höhere Steifigkeit erreicht werden.

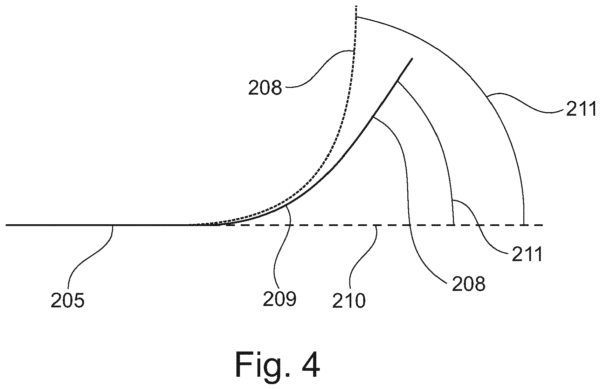

Weiterhin weist das Hebelelement 200 am zweiten Ende 202 zwei Federabschnitte 208 auf. Diese sind so ausgebildet, dass im verbauten Zustand in Umfangsrichtung der Betätigungsabschnitt 203 zwischen den beiden Federabschnitten 208 ausgebildet ist. Jeder Federabschnitt 208 ist über ein Stegelement 209 mit dem Betätigungsabschnitt 203 verbunden. Die Stegelemente 209 sind gegenüber dem Abhubabschnitt 205 in einer Richtung gebogen. Wie Fig. 4 zeigt, erfolgt die Biegung so, dass die Federabschnitte 208 im gebogenen Zustand mit einer Tangente 210 einen Winkel 211 einschließen, der mindestens 60° und bevorzugt etwa 90° beträgt. Die Tangente 210 ist dabei an dem Punkt des Betätigungsabschnitts 205 angelegt, an dem das Stegelement 209 beginnt.

Fig. 4 zeigt zwei Ausgestaltungen, zum einen eine Ausgestaltung mit einem Winkel von etwa 60° in einer durchgezogenen Linie und einer Ausgestaltung mit einem Winkel von etwa 90° jeweils zwischen Federelement 208 und der Tangente 210 in gepunkteter Linie.

Wie Fig. 3 zeigt, sind die Federabschnitte 208 in eine Richtung gebogen, die entgegengesetzt zu der Biegerichtung des Betätigungsabschnitts 203 ist. Durch das Hochbiegen der Federabschnitte 208 kommt es zu einer Versteifung. Durch diese Versteifung kann die Abstützkraft erhöht werden, so dass bei gleichbleibender Abstützkraft die Materialdicke des Hebelelements 200, die sowohl im Betätigungsabschnitt 203, im Abhubaschnitt 205 und in den Federabschnitten 208 vorliegt, verringert werden kann.

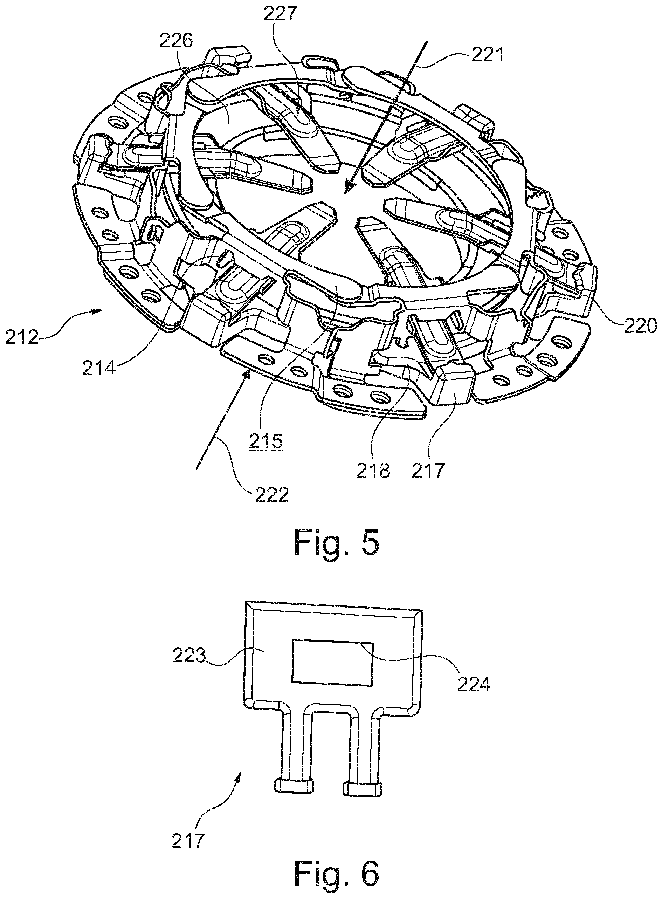

Fig. 5 zeigt schematisch eine Reibkupplung 212. Diese umfasst sechs Hebelelemente 200, andere Ausgestaltungen der Reibkupplung 212 mit einer anderen Anzahl von Hebelelementen 200 sind möglich. Durch Aussparungen 213 in den Federabschnitten 208 kann der jeweilige Federabschnitt 208 in Eingriff mit einer entsprechenden Aussparung 214 in einem Kupplungsdeckel 215 festgelegt werden. In diesem Beispiel ist der Kupplungsdeckel 215 durch sechs Segmente 216 gebildet. Andere Anzahlen von Segmenten 216 oder Ausgestaltungen von Kupplungsdeckeln 215 sind möglich. Die einzelnen Segmente 216 sind im Wesentlichen kreisringförmig miteinander zum Kupplungsdeckel 215 verbunden. Der Abhubabschnitt 205 erstreckt sich anliegend durch Ausnehmungen 225 im Kupplungsdeckel 215 hindurch und ist an diesen durch die Vorspannung des Hebelelements 200 und die Federabschnitte 208 festgelegt, ist also verkippbar am Kupplungsdeckel 215 abgestützt.

Der Abhubabschnitt 205 erstreckt sich durch den Kupplungsdeckel 215 hindurch. Der Abhubabschnitt 205 liegt dabei am Kupplungsdeckel 215 an. Radial außenseitig ist der Abhubabschnitt 205 mit jeweils einem Abhubanker 217 verbunden. Dieser ist einteilig mit einer Anpressplatte 218 ausgeführt. Der Abhubabschnitt 205 greift dabei mit einem Eingreifabschnitt 219 (vgl. Fig. 3), der am zweiten Ende 202 ausgebildet ist, in eine entsprechende Nut 220 des Abhubankers 217 ein. Eine ringförmige Tellerfeder 226 bildet gemeinsam mit den Hebelelementen 200 eine Federeinrichtung 227.

Zum Betätigen der Kupplung wird ein hier nicht gezeigtes Betätigungselement in einer Betätigungsrichtung 221 auf die und mit den Betätigungsabschnitten 203 der Hebelelemente 200 bewegt. Durch die Festlegung der Hebelelemente 200 am Kupplungsdeckel 215 kommt es zu einer Abhubbewegung der Anpressplatte 218 vom hier nicht gezeigten Reibpartner in Abhubrichtung 222.

In Fig. 6 ist schematisch eine alternative Ausgestaltung von Abhubankern 217 gezeigt, die als Flachniete 223 mit einer Öffnung 224 ausgebildet sind. Hier greift der entsprechende Eingriffabschnitt 219 der Hebelelemente 200 in die Öffnung 224 ein. Die Flachniete 223 werden als Abhubanker 217 kraft- und/oder formschlüssig durch eine Nietverbindung mit einer entsprechenden hier nicht gezeigten Anpressplatte verbunden.

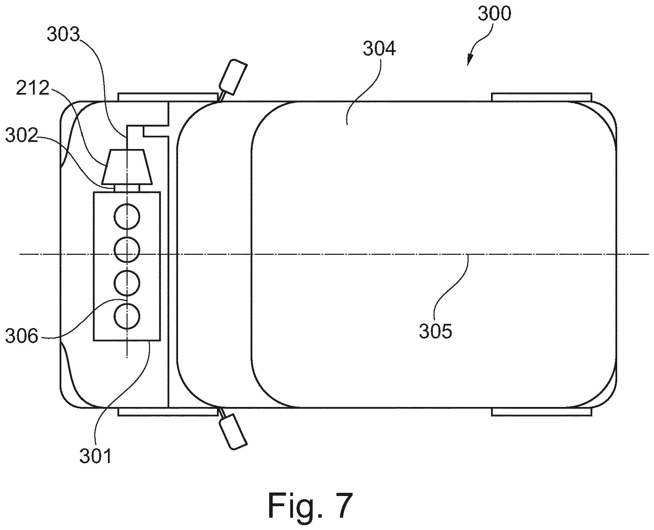

Fig. 7 zeigt sehr schematisch ein Kraftfahrzeug 300 mit einer Antriebseinheit 301, beispielsweise einem Verbrennungs- oder Elektromotor, mit einer Abtriebswelle 302, die über eine Reibkupplung 212 wie hier beschrieben mit einem Antriebsstrang 303 verbunden ist. Dabei ist die Antriebseinheit 301 vor einer Fahrerkabine 304 quer zu einer Längsachse 305 des Kraftfahrzeugs 300 ausgebildet. Eine Rotationsachse 306 der Abtriebswelle 302 steht in einem rechten Winkel zur Längsachse 305.

### Bezugszeichenliste

- 100: Reibkupplung
- 101: Betätigungsabschnitt
- 103: Anpressplatte
- 104: Kupplungsdeckel
- 105: Federeinrichtung
- 106: Tellerfeder
- 107: Hebelelement
- 108: Durchbrechung
- 109: Drehachse
- 110: Abhubabschnitt
- 111: Federabschnitt
- 112: Abhubanker
- 113: Sicke

- 200: Hebelelement
- 201: erstes Ende
- 202: zweites Ende
- 203: Betätigungsabschnitt
- 204: Betätigungsrichtung
- 205: Abhubabschnitt
- 206: Abhubrichtung
- 207: Sicke
- 208: Federabschnitt
- 209: Stegelement
- 210: Tangente
- 211: Winkel
- 212: Reibkupplung
- 213: Aussparung
- 214: Aussparung
- 215: Kupplungsdeckel
- 216: Segment
- 217: Abhubanker
- 218: Anpressplatte
- 219: Eingreifabschnitt
- 220: Nut
- 221: Betätigungsrichtung
- 222: Abhubrichtung
- 223: Flachniet
- 224: Öffnung
- 225: Ausnehmung
- 226: Tellerfeder
- 227: Federeinrichtung

- 300: Kraftfahrzeug
- 301: Antriebseinheit
- 302: Abtriebswelle
- 303: Antriebsstrang
- 304: Fahrerkabine
- 305: Längsachse
- 306: Rotationsachse

## Patentansprüche

1. Reibkupplung (212) für einen Antriebsstrang (303) eines brennkraftmaschinengetriebenen Kraftfahrzeugs (300), umfassend eine Anpressplatte (218) und eine Federeinrichtung (227) zur Beaufschlagung der Anpressplatte (218) mit wenigstens einem Hebelelement (200), wobei das Hebelelement (200) an einem ersten Ende (201) einen Betätigungsabschnitt (203) und an einem dem ersten Ende (201) gegenüberliegenden zweiten Ende (202) zwei Federabschnitte (208) und einen zwischen den Federabschnitten (208) ausgebildeten Abhubabschnitt (205), der mit einem Abhubanker (217) zum Abheben der Anpressplatte (218) verbunden ist, aufweist, wobei die Federabschnitte (208) jeweils über ein Stegelement (209) mit dem Abhubabschnitt (205) verbunden sind und die Stegelemente (209) gegenüber dem Abhubabschnitt (205) so in eine Richtung gebogen sind, dass die Federabschnitte (208) einen Winkel (211) von mindestens 60° mit einer Tangente (210) an den Abhubabschnitt (205) im Bereich des Stegelements (209) einschließen.

2. Reibkupplung (212) nach Anspruch 1, wobei der Abhubabschnitt (205) die Federabschnitte (208) in Richtung des zweiten Endes (202) überragt.

3. Reibkupplung (212) nach Anspruch 1 oder 2, wobei das Hebelelement (200) mindestens eine Sicke (207) aufweist.

4. Reibkupplung (212) nach einem der Ansprüche 1 bis 3, wobei der Abhubanker (217) eine Nut (220) zur Aufnahme wenigstens eines Teils des Abhubabschnitts (205) des Hebelelements (200) aufweist.

5. Reibkupplung (212) nach einem der Ansprüche 1 bis 4, wobei der Abhubanker (217) einteilig mit der Anpressplatte (218) ausgebildet ist.

6. Reibkupplung (212) nach einem der Ansprüche 1 bis 4, wobei der Abhubanker (217) kraft- und/oder formschlüssig mit der Anpressplatte (218) verbunden ist.

7. Reibkupplung (212) nach einem der Ansprüche 1 bis 6, wobei die Federabschnitte (208) mit einem Bauteil (215), gegenüber dem die Anpressplatte (218) in einer axialen Richtung beweglich ist, vorgespannt verbunden sind.

8. Kraftfahrzeug (300) aufweisend eine Antriebseinheit (301) mit einer Abtriebswelle (302), einem Antriebsstrang (303) und einer Reibkupplung (212) nach einem der Ansprüche 1 bis 7 zum lösbaren Verbinden der Abtriebswelle (302) mit dem Antriebsstrang (303).

9. Kraftfahrzeug (300) nach Anspruch 8, wobei die Antriebseinheit (301) im Kraftfahrzeug (300) vor einer Fahrerkabine (304) und quer zu einer Längsachse (305) des Kraftfahrzeugs (300) angeordnet ist

## Claims

1. Friction clutch (212) for a drive train (303) of a motor vehicle (300) which is driven by internal combustion engine, comprising a pressing plate (218) and a spring device (227) for loading the pressing plate (218) with at least one lever element (200), the lever element (200) having, at a first end (201), an actuating section (203) and, at a second end (202) which lies opposite the first end (201), two spring sections (208) and a lift section (205) which is configured between the spring sections (208) and is connected to a lift armature (217) for lifting the pressing plate (218), the spring sections (208) being connected to the lift section (205) in each case via a web element (209), and the web elements (209) being curved in one direction with respect to the lift section (205) in such a way that the spring sections (208) enclose an angle (211) of at least 60° with a tangent (210) onto the lift section (205) in the region of the web element (209).

2. Friction clutch (212) according to Claim 1, the lift section (205) protruding beyond the spring sections (208) in the direction of the second end (202).

3. Friction clutch (212) according to Claim 1 or 2, the lever element (200) having at least one bead (207).

4. Friction clutch (212) according to one of Claims 1 to 3, the lift armature (217) having a groove (220) for receiving at least one part of the lift section (205) of the lever element (200).

5. Friction clutch (212) according to one of Claims 1 to 4, the lift armature (217) being configured in one piece with the pressing plate (218).

6. Friction clutch (212) according to one of Claims 1 to 4, the lift armature (217) being connected to the pressing plate (218) in a non-positive and/or positively locking manner.

7. Friction clutch (212) according to one of Claims 1 to 6, the spring sections (208) being connected in a prestressed manner to a component (215), with respect to which the pressing plate (218) can be moved in an axial direction.

8. Motor vehicle (300) having a drive unit (301) with an output shaft (302), a drive train (303) and a friction clutch (212) according to one of Claims 1 to 7 for connecting the output shaft (302) releasably to the drive train (303).

9. Motor vehicle (300) according to Claim 8, the drive unit (301) being arranged in the motor vehicle (300) in front of a driver's cab (304) and transversely with respect to a longitudinal axis (305) of the motor vehicle (300).

## Revendications

1. Embrayage à friction (212) pour une chaîne cinématique (303) d'un véhicule automobile (300) entraîné par un moteur à combustion interne, comprenant une plaque de pressage (218) et un dispositif à ressort (227) pour solliciter la plaque de pressage (218) avec au moins un élément de levier (200), l'élément de levier (200) présentant, au niveau d'une première extrémité (201), une portion d'actionnement (203), et au niveau d'une deuxième extrémité (202) opposée à la première extrémité (201), deux portions de ressort (208) et une portion de levage (205) réalisée entre les portions de ressort (208), qui est connectée à une armature de levage (217) pour soulever la plaque de pressage (218), les portions de ressort (208) étant à chaque fois connectées par le biais d'un élément de nervure (209) à la portion de levage (205) et les éléments de nervure (209) étant courbés par rapport à la portion de levage (205) dans une direction telle que les portions de ressort (208) forment un angle (211) d'au moins 60° avec une tangente (210) à la portion de levage (205) dans la région de l'élément de nervure (209).

2. Embrayage à friction (212) selon la revendication 1, dans lequel la portion de levage (205) fait saillie au-delà des portions de ressort (208) dans la direction de la deuxième extrémité (202).

3. Embrayage à friction (212) selon la revendication 1 ou 2, dans lequel l'élément de levier (200) présente au moins une moulure (207).

4. Embrayage à friction (212) selon l'une quelconque des revendications 1 à 3, dans lequel l'armature de levage (217) présente une rainure (220) pour recevoir au moins une partie de la portion de levage (205) de l'élément de levier (200).

5. Embrayage à friction (212) selon l'une quelconque des revendications 1 à 4, dans lequel l'armature de levage (217) est réalisée d'une seule pièce avec la plaque de pressage (218).

6. Embrayage à friction (212) selon l'une quelconque des revendications 1 à 4, dans lequel l'armature de levage (217) est connectée par engagement par force et/ou par correspondance de formes, avec la plaque de pressage (218).

7. Embrayage à friction (212) selon l'une quelconque des revendications 1 à 6, dans lequel les portions de ressort (208) sont connectées de manière précontrainte à un composant (215) par rapport auquel la plaque de pressage (218) peut être déplacée dans une direction axiale.

8. Véhicule automobile (300) présentant une unité d'entraînement (301) avec un arbre de prise de force (302), une chaîne cinématique (303) et un embrayage à friction (212) selon l'une quelconque des revendications 1 à 7, pour la connexion amovible de l'arbre de prise de force (302) à la chaîne cinématique (303).

9. Véhicule automobile (300) selon la revendication 8, dans lequel l'unité d'entraînement (301) est disposée dans le véhicule automobile (300) avant une cabine de conducteur (304) et transversalement par rapport à un axe longitudinal (305) du véhicule automobile (300).
